# EUROPÄISCHE PATENTSCHRIFT

(11) **EP 1 738 448 B1**
(45) Veröffentlichungstag und Bekanntmachung des Hinweises auf die Patenterteilung: **02.10.2019**
(21) Anmeldenummer: 05716650.6
(22) Anmeldetag: 09.02.2005
(51) Int. Cl.: H02K 1/24, H02K 3/52, H02K 23/40

(54) **WICKLUNGSTRÄGER FÜR EINE ELEKTRISCHE MASCHINE**
WINDING SUPPORT FOR AN ELECTRICAL MACHINE
SUPPORT D'ENROULEMENT POUR MACHINE ELECTRIQUE

(30) Priorität: 15.04.2004 DE 102004018208
(43) Veröffentlichungstag der Anmeldung: 03.01.2007
(73) Patentinhaber: ROBERT BOSCH GMBH, 70442 Stuttgart (DE)
(72) Erfinder: ROOS, Gerald, 77855 Sasbachried (DE); BITZER, Harold, 77815 Buehl (DE); RAUSCHNING, Markus, 77815 Buehl (DE)
(86) Internationale Anmeldenummer: PCT/EP2005/050555
(87) Internationale Veröffentlichungsnummer: WO 2005/101613

(56) Entgegenhaltungen:
- DE-A1- 10 064 245
- US-A1- 2003 024 097
- PATENT ABSTRACTS OF JAPAN Bd. 014, Nr. 451 (E-0984), 27. September 1990 (1990-09-27) -& JP 02 179233 A (MATSUSHITA ELECTRIC IND CO LTD), 12. Juli 1990 (1990-07-12)
- PATENT ABSTRACTS OF JAPAN Bd. 012, Nr. 440 (E-684), 18. November 1988 (1988-11-18) -& JP 63 171143 A (SANKYO SEIKI MFG CO LTD), 14. Juli 1988 (1988-07-14)

## Beschreibung

### Stand der Technik

Die Erfindung geht aus von einem Wicklungsträger für eine elektrische Maschine nach dem Oberbegriff des Patentanspruchs 1. Ein derartiger Wicklungsträger ist als ein Blechpaket ausgeführt und weist mehrere Polzähne auf. Die Polzähne haben jeweils einen Polfuß, um den eine Wicklung anordenbar ist. Die Bleche sind dabei mit immer gleicher Breite ausgeführt. Durch das Schichten der Bleche hintereinander hat der Polfuß eines Quaders, um den die Wicklung gelegt werden muss, was eine relativ große Drahtlänge zur Folge hat.

Die JP 02179233 A beschreibt einen als Blechpaket ausgeführten Wicklungsträger, bei dem die einzelnen Bleche ausgehend von den Stirnseiten des Blechpakets eine zunehmende Breite aufweisen.

### Vorteile der Erfindung

Der erfindungsgemäße Wicklungsträger für eine elektrische Maschine mit den kennzeichnenden Merkmalen des Patentanspruchs 1 hat den Vorteil, dass durch Stufungen in der Zahnbreite der Zahnquerschnitt "verrundet" wird und damit der Umfang kleiner. Dadurch wird der Wickeldraht kürzer, wodurch der Widerstand sinkt. Dies ermöglicht einen höheren Wirkungsgrad oder die Verwendung eines dünneren Drahtes. Dies ist insbesondere bei Einzelzahnwicklungen von Vorteil bei denen die Kupferfüllung im Nutraum gering ist. Hierzu ist ein Wicklungsträger vorgesehen, der als ein Blechpaket ausgeführt ist und mehrere Polzähne aufweist, die jeweils einen Polfuß haben, um den eine Wicklung anordenbar ist, wobei die Polfüße ausgehend von den Stirnseiten des Blechpakets eine zunehmende Breite haben, wobei im Blechpaket Gruppen von Blechen mit gleicher Breite zusammengefasst sind.

In einer bevorzugten Weiterbildung weisen die Bleche des Blechpakets ausgehend von den Stirnseiten des Blechpakets zur Mitte hin im Bereich der Polfüße eine zunehmende Breite auf, die in der Mitte ihr Maximum hat. Dadurch ergibt sich ein besonders günstiges Verhältnis hinsichtlich der Größe und des Umfangs.

Vorzugsweise hat der Wicklungsträger einen Abschnitt, von dem die Polzähne radial abstehen, wobei Außenumfangsbereiche des Abschnitts, die zwischen den Polzähnen liegen, auf einem Kreis liegen. Durch diese Geometrie eignet sich der Wicklungsträger besonders gut als Anker oder Ständer eines permanenterregten Gleichstrommotors.

In einer vorteilhaften Weiterbildung weisen die Polzähne Polköpfe auf, die breiter als die Polfüße sind, wobei die Polköpfe über die Länge des Wicklungsträgers eine gleichbleibende Breite haben. Dadurch ergibt sich ein besserer Wirkungsgrad.

Vorzugsweise sind die Polzähne wenigstens im Bereich der Polfüße, um die die Wicklung anordenbar ist, zumindest stirnseitig mit Isolationsmasken versehen. Dies ist eine platzsparende Maßnahme zur Isolierung. Weisen die Isolationsmasken einen an den Stirnseiten der Polfüße anliegenden Abschnitt auf, an den sich zwei schräg abstehende Flügel anschließen, die sich an die Seitenflächen der Polfüße anschmiegen, so ergibt dies eine optimale Isolierung.

Eine besonders platzsparende Weiterbildung ergibt sich, wenn die maximale Breite der Polfüße im Wesentlichen der Länge des Blechpakets entspricht.

Mit einem derartigen Wicklungsträger ergeben sich besonders kompakte Anker. Auch eine elektrische Maschine mit einem derartigen Wicklungsträger baut recht klein und hat doch recht gute Leistungswerte.

Weitere Vorteile und vorteilhafte Weiterbildungen ergeben sich aus den Unteransprüchen und der Beschreibung.

### Zeichnung

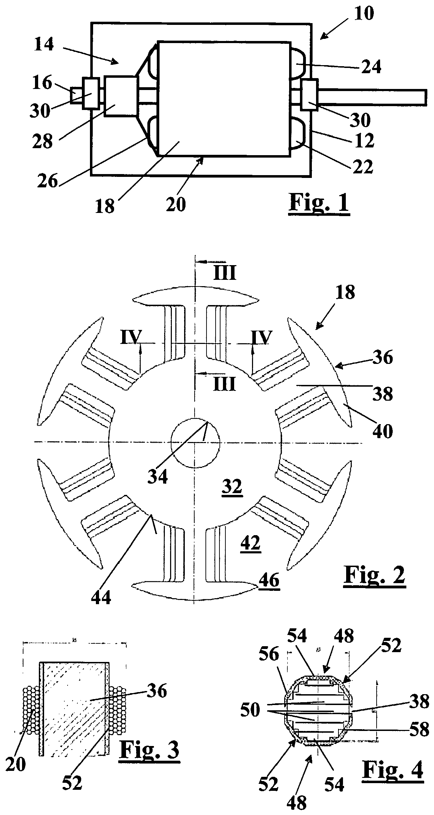

Ein Ausführungsbeispiel ist in der Zeichnung dargestellt und in der nachfolgenden Beschreibung näher erläutert. Es zeigen Figur 1 eine elektrische Maschine im Längsschnitt, Figur 2 einen Anker nach Figur 1 in einer Stirnansicht, Figur 3 einen Polzahn des Ankers im Längsschnitt gemäß den Schnittlinien III-III in Figur 2 und Figur 4 den Polzahn in einem Querschnitt gemäß den Schnittlinien IV-IV in Figur 2, wie aus dem Stand der Technik bekannt.

### Beschreibung des Ausführungsbeispiels

In der Figur 1 ist ein Elektromotor 10 vereinfacht in einem Längsschnitt dargestellt. Der Elektromotor 10 kann in einem Kraftfahrzeug beispielsweise in einem Fensterheber, Sitzmotor oder dergleichen. Der Elektromotor 10 umfasst ein Gehäuse 12 und einen darin angeordneten Anker 14. Der Anker 14 weist eine Welle 16 und einen Wicklungsträger in Form eines Blechpakets 18 mit einer Ankerwicklung 20 auf, von denen die überstehenden Wülste zweier einzelner Wicklungsstränge 22, 24 dargestellt sind. Die Wicklungsstränge 22, 24 sind über Drähte 26 mit einem Kommutator 28 verbunden. Die Welle 16 ist an den Stirnseiten des Elektromotors 10 in zwei Gleitlagern 30 gelagert.

In der Figur 2 ist das Blechpaket 18 in einer Stirnansicht ohne die Welle 16 und die Ankerwicklung 20 gezeigt. Von einem ringförmigen Abschnitt 32, der eine Bohrung 34 für die Welle 16 aufweist, stehen radial sechs Polzähne 36 ab. Es können auch mehr oder weniger als sechs Polzähne 36 vorgesehen sein. Die Polzähne 36 umfassen einen sich an den Abschnitt 32 anschließenden Polfuß 38 und vorzugsweise einen sich daran anschließenden Polkopf 40, der breiter als der Polfuß 38 ist. Dadurch bilden zwei benachbarte Polzähne 36 eine hinterschnittene Nut 42 für die Ankerwicklung 20. Der jeweils zwischen zwei benachbarten Polzähnen 36 liegende Nutgrund 44, bzw. der Außenumfangsbereich des Abschnitts 32, liegt im Wesentlichen auf einem Kreis, wobei vorzugsweise der Übergang eines Nutrundes 44 mit einem angrenzenden Polfuß 38 verrundet ist und somit nicht auf dem Kreis liegt. Es ist auch möglich, die Polzähne 36 nur mit einem Polfuß 38 aber ohne einen Polkopf 40 auszuführen.

Die Polköpfe 40 sind breiter als die Polfüße 38 und haben aber über die Länge des Blechpakets 18 eine gleichbleibende Breite. Dadurch ergibt sich ein konstanter Nutschlitz 46 der Nuten 42, was sich positiv auf die Leistung auswirkt.

In der Figur 3 ist gezeigt, wie eine Wicklung 20 um einen Polzahn 36 gelegt ist. Besonders geeignet ist eine Einzelzahnwicklung.

In der Figur 4 ist ein Polfuß 38 quer geschnittenen dargestellt, wodurch seine Querschnittsfläche deutlich wird. Die Polfüße 38 haben ausgehend von den Stirnseiten 48 des Blechpakets 18 eine zunehmende Breite. Vorzugsweise haben die Bleche 50 ausgehend von den Stirnseiten 48 des Blechpakets 18 zur Mitte hin im Bereich der Polfüße 38 eine zunehmende Breite, wobei in der Mitte die maximale Breite erreicht ist.

Eine einfache Herstellung ergibt sich, wenn hierbei Gruppen von Blechen 50 mit gleicher Breite zusammengefasst werden. Dadurch ergibt sich zwar eine größere Stufung. Die Polfüße 38 haben aber dennoch eine einem Kreis angenäherte Form. Hierzu ist es sinnvoll, wenn die maximale Breite der Polfüße 38 im Wesentlichen der Länge der Blechpakets 18 entspricht. Natürlich umfasst dies fertigungsbedingte Abweichungen.

Alternativ ist es auch denkbar, dass das Blechpaket 18 länger als die Breite der Polfüße 38 ist. Dadurch ist der Aufbau jedoch nicht so kompakt.

Die Figur 4 zeigt auch, dass die Polzähne 36 wenigstens im Bereich der Polfüße 38, um die die Wicklung 20 angeordnet ist, zumindest stirnseitig mit Isolationsmasken 52 versehen sind. Die Isolationsmasken 52 weisen einen an den Stirnseiten 48 der Polfüße 38 anliegenden Abschnitt 54 auf, an den sich zwei schräg abstehende Flügel 56 anschließen, die sich an die Seitenflächen 58 der Polfüße 38 anschmiegen. Die Flügel 56 sind eben ausgebildet und stehen vorzugsweise unter einem Winkel von 45° zum Abschnitt 54. Dadurch ergibt sich ein einfacher Aufbau.

Anstelle des gezeigten Ankers 18 kann es sich auch um einen bewickelten Ständer oder Stator handeln, beispielsweise einen Außenläufermotor. Ebenfalls ist es möglich, dass es sich um einen ringförmigen Stator, beispielsweise eines Generators, mit nach innen gerichteten Polzähnen handeln kann.

## Patentansprüche

1. Wicklungsträger (18) für eine elektrische Maschine (10), der als ein Blechpaket ausgeführt ist und mehrere Polzähne (36) aufweist, die jeweils einen Polfuss (38) haben, um den eine Wicklung (20) anordenbar ist, wobei die Polfüße (38) ausgehend von den Stirnseiten (48) des Blechpakets eine zunehmende Breite haben, **dadurch gekennzeichnet, dass** im Blechpaket Gruppen von Blechen (50) mit gleicher Breite zusammengefasst sind.

2. Wicklungsträger (18) nach Anspruch 1, **dadurch gekennzeichnet, dass** die Bleche (50) des Blechpakets ausgehend von den Stirnseiten (48) des Blechpakets zur Mitte hin im Bereich der Polfüsse (38) eine zunehmende Breite aufweisen und in der Mitte am breitesten sind.

3. Wicklungsträger (18) nach Anspruch 1 oder 2, **dadurch gekennzeichnet, dass** der Wicklungsträger (18) einen Abschnitt (32) hat, von dem die Polzähne (36) radial abstehen, wobei Außenumfangsbereiche (44) des Abschnitts (32), die zwischen benachbarten Polzähnen (36) liegen, im Wesentlichen einem auf Kreis liegen.

4. Wicklungsträger (18) nach einem der vorhergehenden Ansprüche, **dadurch gekennzeichnet, dass** die Polzähne (36) Polköpfe (40) aufweisen, die breiter als die Polfüße (38) sind, wobei die Polköpfe (40) eine gleichbleibende Breite haben.

5. Wicklungsträger (18) nach einem der vorhergehenden Ansprüche, **dadurch gekennzeichnet, dass** die Polzähne (36) wenigstens im Bereich der Polfüße (38), um die die Wicklung (40) anordenbar ist, zumindest stirnseitig mit Isolationsmasken (52) versehen sind.

6. Wicklungsträger (18) nach Anspruch 5, **dadurch gekennzeichnet, dass** die Isolationsmasken (52) einen an den Stirnseiten (48) der Polfüße (38) anliegenden Abschnitt (54) aufweisen, an den sich zwei schräg abstehende Flügel (56) anschließen, die an den Seitenflächen (58) der Polfüße (38) anliegen.

7. Wicklungsträger (18) nach einem der vorhergehenden Ansprüche, **dadurch gekennzeichnet, dass** die maximale Breite der Polfüße (38) im Wesentlichen der Länge des Wicklungsträgers (18) entspricht.

8. Wicklungsträger (18) nach einem der vorhergehenden Ansprüche, **dadurch gekennzeichnet, dass** die Polzähne (38) mit einer Einzelzahnwicklung versehen sind.

9. Wicklungsträger (18) nach einem der vorhergehenden Ansprüche, **dadurch gekennzeichnet, dass** die Polfüße (38) eine einem Kreis angenährte Querschnittsform aufweisen.

10. Anker mit Kommutator (28) und mit einem Wicklungsträger (18) nach einem der vorhergehenden Ansprüche.

11. Elektrische Maschine (10) mit einem Wicklungsträger (18) nach einem der vorhergehenden Ansprüche.

## Claims

1. Winding support (18) for an electrical machine (10) which is designed as a laminated core and has a plurality of pole teeth (36) which each have a pole foot (38) around which a winding (20) can be arranged, wherein the pole feet (38) have an increasing width starting from the end sides (48) of the laminated core, **characterized in that** groups of laminations (50) with the same width are combined in the laminated core.

2. Winding support (18) according to Claim 1, **characterized in that** the laminations (50) of the laminated core have an increasing width starting from the end sides (48) of the laminated core towards the centre in the region of the pole feet (38) and are widest in the centre.

3. Winding support (18) according to Claim 1 or 2, **characterized in that** the winding support (18) has a section (32) from which the pole teeth (36) radially protrude, wherein outer circumferential regions (44) of the section (32) which lie between adjacent pole teeth (36) lie substantially in a circle.

4. Winding support (18) according to one of the preceding claims, **characterized in that** the pole teeth (36) have pole heads (40) which are wider than the pole feet (38), wherein the pole heads (40) have a constant width.

5. Winding support (18) according to one of the preceding claims, **characterized in that** the pole teeth (36) are provided with insulation masks (52) at least at the end side at least in the region of the pole feet (38) around which the winding (40) can be arranged.

6. Winding support (18) according to Claim 5, **characterized in that** the insulation masks (52) have a section (54) which bears against the end sides (48) of the pole feet (38) and which is adjoined by two obliquely protruding vanes (56) which bear against the side faces (58) of the pole feet (38).

7. Winding support (18) according to one of the preceding claims, **characterized in that** the maximum width of the pole feet (38) corresponds substantially to the length of the winding support (18).

8. Winding support (18) according to one of the preceding claims, **characterized in that** the pole teeth (36) are provided with a single-tooth winding.

9. Winding support (18) according to one of the preceding claims, **characterized in that** the pole feet (38) have a cross-sectional shape which approximates a circle.

10. Armature comprising a commutator (28) and comprising a winding support (18) according to one of the preceding claims.

11. Electrical machine (10) comprising a winding support (18) according to one of the preceding claims.

## Revendications

1. Support d'enroulement (18) pour une machine électrique (10), qui est réalisé sous forme d'empilement de tôles et qui présente plusieurs dents polaires (36) qui présentent chacune une base polaire (38) autour de laquelle peut être disposé un enroulement (20), les bases polaires (38) présentant une largeur croissante à partir des côtés frontaux (48) de l'empilement de tôles, **caractérisé en ce que** des groupes de tôles (50) de même largeur sont réunis dans l'empilement de tôles.

2. Support d'enroulement (18) selon la revendication 1, **caractérisé en ce que** les tôles (50) de l'empilement de tôles présentent une largeur croissante à partir des côtés frontaux (48) de l'empilement de tôles vers le milieu dans la région des bases polaires (38) et sont les plus larges au centre.

3. Support d'enroulement (18) selon la revendication 1 ou 2, **caractérisé en ce que** le support d'enroulement (18) présente une portion (32) depuis laquelle les dents polaires (36) font saillie radialement, des régions périphériques extérieures (44) de la portion (32), qui sont situées entre des dents polaires adjacentes (36), étant situées sensiblement sur un cercle.

4. Support d'enroulement (18) selon l'une quelconque des revendications précédentes, **caractérisé en ce que** les dents polaires (36) présentent des têtes polaires (40) qui sont plus larges que les bases polaires (38), les têtes polaires (40) présentant une largeur constante.

5. Support d'enroulement (18) selon l'une quelconque des revendications précédentes, **caractérisé en ce que** les dents polaires (36) sont pourvues au moins du côté frontal de masques d'isolation (52) au moins dans la région des bases polaires (38) autour desquelles l'enroulement (40) peut être disposé.

6. Support d'enroulement (18) selon la revendication 5, **caractérisé en ce que** les masques d'isolation (52) présentent une portion (54) s'appliquant au niveau des côtés frontaux (48) des bases polaires (38), à laquelle se raccordent deux ailes saillant obliquement (56) qui s'appliquent contre les faces latérales (58) des bases polaires (38).

7. Support d'enroulement (18) selon l'une quelconque des revendications précédentes, **caractérisé en ce que** la largeur maximale des bases polaires (38) correspond essentiellement à la longueur du support d'enroulement (18).

8. Support d'enroulement (18) selon l'une quelconque des revendications précédentes, **caractérisé en ce que** les dents polaires (36) sont pourvues d'un enroulement à une seule dent.

9. Support d'enroulement (18) selon l'une quelconque des revendications précédentes, **caractérisé en ce que** les bases polaires (38) présentent une section transversale approximativement en forme de cercle.

10. Induit comprenant un collecteur (28) et un support d'enroulement (18) selon l'une quelconque des revendications précédentes.

11. Machine électrique (10) comprenant un support d'enroulement (18) selon l'une quelconque des revendications précédentes.
